# EUROPÄISCHE PATENTSCHRIFT

(11) **EP 2 527 870 B1**
(45) Veröffentlichungstag und Bekanntmachung des Hinweises auf die Patenterteilung: **26.11.2014**
(21) Anmeldenummer: 12166729.9
(22) Anmeldetag: 04.05.2012
(51) Int. Cl.: G01S 7/527, G01S 15/42

(54) **Verfahren und Vorrichtung zur Detektion eines oder mehrerer festgelegter Impulse oder Impulsfolgen in einem Empfangs- oder Gruppensignal sowie Aktivsonaranlage**
Method and device for detecting one or more fixed pulses or pulse trains in a receiving or group signal and active sonar assembly
Procédé et dispositif de détection d'une ou plusieurs impulsions fixées ou séries d'impulsions dans un signal de groupe ou de réception ainsi qu'une installation de sonar actif

(30) Priorität: 21.05.2011 DE 102011102242
(43) Veröffentlichungstag der Anmeldung: 28.11.2012
(73) Patentinhaber: ATLAS ELEKTRONIK GmbH, 28309 Bremen (DE)
(72) Erfinder: Biegler, Heiko, 28309 Bremen (DE); Brinker, Heinrich, 26903 Surwold (DE)
(74) Vertreter: Weidner Stern Jeschke

(56) Entgegenhaltungen:
- EP-A1- 2 023 159
- EP-A2- 2 278 354
- SERGIO BARBAROSSA ET AL: "Analysis of Nonlinear FM Signals by Pattern Recognition of Their Time-Frequency Representation", IEEE SIGNAL PROCESSING LETTERS, IEEE SERVICE CENTER, PISCATAWAY, NJ, US, Bd. 3, Nr. 4, 1. April 1996 (1996-04-01), XP011059832, ISSN: 1070-9908
- KRISHNAN S ET AL: "Detection of chirp and other components in the time-frequency plane using the Hough and Radon transforms", COMMUNICATIONS, COMPUTERS AND SIGNAL PROCESSING, 1997. 10 YEARS PACRIM 1987-1997 - NETWORKING THE PACIFIC RIM. 1997 IEEE PACIFIC RIM CONFERE NCE ON VICTORIA, BC, CANADA 20-22 AUG. 1997, NEW YORK, NY, USA,IEEE, US, Bd. 1, 20. August 1997 (1997-08-20), Seiten 138-141, XP010244935, DOI: 10.1109/PACRIM.1997.619920 ISBN: 978-0-7803-3905-7

## Beschreibung

Die Erfindung betrifft ein Verfahren zum Detektieren eines oder mehrerer vorbestimmter Impulse oder Impulsfolgen in einem Empfangs- oder Gruppensignal nach dem Oberbegriff von Anspruch 1 und eine Vorrichtung zur Detektion eines oder mehrerer vorbestimmter Impulse oder Impulsfolgen nach dem Oberbegriff von Anspruch 9 sowie eine Aktivsonaranlage nach dem Oberbegriff von Anspruch 15.

In der Sonartechnik wird zwischen Aktivsonaren und Passivsonaren unterschieden. Mit einem Aktivsonar werden schmalbandige Impulse in den Raum ausgesandt und anschließend deren Echos, die an rückstreuungsfähigen natürlichen und technischen Objekten entstehen, in einem Empfänger aufgefasst und nach Empfangsrichtung, nach spektraler Verschiebung sowie nach der Laufzeit analysiert. Durch die Analyse der Laufzeit kann der Abstand eines potentiellen Ziels bestimmt werden.

Im Empfänger werden neben den schmalbandigen ausgesendeten Impulsen oder Impulsfolgen, die bereits durch Ausbreitungsverluste beim Verlauf durch einem Kanal sowie durch Reflektionsverluste an einem Ziel beeinträchtigt sind, auch additives Rauschen und Nachhall als überlagerte Störsignale empfangen. Um die ausgesendeten Impulse oder Impulsfolgen eindeutig von den überlagerten Störsignalen im Empfangssignal eines Empfängers zu unterscheiden und damit zu erkennen bzw. detektieren, sind gemäß dem Stand der Technik sog. Korrelationsfilter einer Signalvorverstärkung des Empfangssignals nachgeschaltet. Das Korrelationsfilter wird dazu in bestimmter Weise ausgelegt, so dass es die ausgesendete und dadurch festgelegten Impulse oder Impulsfolgen im Empfangssignal detektiert. Dazu wird das Empfangssignal mit dem Korrelationsfilter gefiltert und ein Übereinstimmungsmaß des Empfangssignals mit dem erwarteten Impuls oder der erwarteten Impulsfolge ausgegeben. Ferner wird ein Schwellenwert festgelegt und im Falle, dass das Übereinstimmungsmaß in einem Zeitbereich oberhalb des festgelegten Schwellenwerts liegt, wird angenommen, dass der erwartete Impuls bzw. die erwartete Impulsfolge in diesem Zeitbereich im Empfangssignal auftritt.

Nachteilig am Stand der Technik ist, dass durch starke Störsignale überlagerte erwartete Impulse bzw. erwartete Impulsfolgen nur unzuverlässig in einem Empfangssignal bestimmt werden können. Ursache für die unzuverlässige Bestimmung ist, dass gestörte Impulse oder Impulsfolgen nur ein gering höheres Übereinstimmungsmaß als gewöhnliche Umgebungsgeräusche aufweisen und daher ein sehr geringer Schwellenwert festgelegt werden muss. Dieser geringe Schwellenwert führt dazu, dass zumindest teilweise nicht vorhandene Impulse oder Impulsfolgen im Empfangssignal detektiert oder dass vorhandene Impulse oder Impulsfolgen im Empfangssignal nicht erkannt werden.

Die EP 2 023 159 A1 offenbart ein Verfahren zum Lokalisieren eines Objekts mittels eines Sonarsystems mit mindestens drei Hydrophonen, wobei mindestens eine Anordnung von Wandlern umfasst ist, welche sowohl als Signalgeber als auch als Signalrezeptoren verwendet werden können und jeder Wandler eine bestimmte Resonanzfrequenz / einen bandbegrenzten Betriebsfrequenzbereich aufweist.

In der EP 2 278 354 A2 wird ein Verfahren und eine Vorrichtung zur Ermittlung von periodischen Signalanteilen mit diskreter und/oder kontinuierlicher Signalform in einem empfangenen Radarsignal *(x(t))* offenbart, wobei zur Ermittlung der periodischen Singalanteile ein zum empfangenen Radarsignal (*x*(*t*) gehöriges Leistungsdichtespektrums (*X_{P}*) mittels Fourier-Transformation ermittelt wird.

In SERGIO BARBAROSSA ET AL: "Analysis of nonlinear FM signals by pattern recognition of their time-frequency representation" wird ein Verfahren zur Detektion und Parameterschätzung nichtlinearer FM-Signale offenbart, wobei das Empfangssignal durch eine Zeit-Frequenz-Verteilung in eine Zeit-Frequenz Ebene umgewandelt wird und durch Anwendung einer Mustererkennungstechnik, wie der Hough-Transformation, spezifische Formen der Zeit-Frequenz-Darstellung erkannt werden.

KRISHNAN S ET AL: "Detection of chirp and other components in the time-frequency plane using the Hough and Radon transforms" offenbart ein Verfahren zur Detektion von chirp (lineare Frequenzmodulation) Komponenten in ortsveränderlichen Mehrkomponenten-Signalen in der Zeit-Frequenz-Ebene, wobei die chirp Komponenten mit unterschiedlichen Energien in einem unbekannten Rauschsignalverhältnis detektiert werden können.

Der vorliegenden Erfindung liegt das technische Problem zugrunde, die Robustheit bei der Detektion eines oder mehrerer vorbestimmter Impulse oder Impulsfolgen zu erhöhen und somit auch bei Empfangssignalen mit starken Störanteilen zuverlässig die festgelegten Impulse oder Impulsfolgen zu detektieren.

Die Erfindung löst dieses Problem durch die Merkmale eines Verfahrens zum Detektieren eines oder mehrerer vorbestimmter Impulse oder Impulsfolgen in einem Empfangs- oder Gruppensignal gemäß Anspruch 1 und durch die Merkmale einer Vorrichtung zur Detektion eines oder mehrerer vorbestimmter Impulse oder Impulsfolgen in einem Empfangs- oder Gruppensignal gemäß Anspruch 9 sowie durch die Merkmale einer Aktivsonaranlage gemäß Anspruch 15.

Die Erfindung betrifft zur Lösung des Problems ein Verfahren zum Detektieren eines oder mehrerer vorbestimmter Impulse oder vorbestimmter Impulsfolgen in einem aus empfangenen Schallwellen ermittelten Empfangssignal oder in mehreren zu einem Gruppensignal zusammengefassten, aus empfangenen Schallwellen ermittelten Empfangssignalen. Hierbei treffen die Schallwellen auf Empfänger, die z.B. elektroakustische oder optoakustische Empfänger einer Sonaranlage sind, und werden mit den Empfängern in Empfangssignale umgewandelt. Daraufhin werden die Empfangssignale, z.B. durch zeitverzögerte Addition der Empfangssignale, insbesondere durch Richtungsbildung bzw. Beamforming, zu Gruppensignalen zusammengefasst. Ferner können die Empfangssignale beim oder vor dem Zusammenfassen zu Gruppensignalen für die weitere Verarbeitung durch eine Signalaufbereitung, z.B. durch Vorverstärkung, Frequenzmischung und/oder Tiefpassfilterung aufbereitet werden.

Aus dem Empfangssignal oder dem Gruppensignal wird ein Spektrogramm ermittelt. Ein Spektrogramm ist die Darstellung des zeitlichen Verlaufs des Spektrums des Empfangssignals bzw. des Gruppensignals. D.h. es werden zeitlich nacheinander Spektren aus dem Empfangssignal bzw. dem Gruppensignal ermittelt und diese in einem Spektrogramm aufgetragen. Aus einem vorbestimmten Impuls oder einer vorbestimmten Impulsfolge wird ferner ein Referenzmuster ermittelt. Ein vorbestimmter Impuls umfasst dabei eine zeitliche Dauer, in der das Empfangssignal im Wesentlichen konstante und/oder variierende Frequenzen aufweist. Eine Impulsfolge weist mehrere direkt aufeinanderfolgende Impulse auf. Ein Impuls entspricht also z.B. einer zeitlichen Dauer, in der das Empfangssignal eine definierte Frequenz, also z.B. eine vorbestimmte Sinusschwingung, die im Wesentlichen konstant ist, aufweist. Die zeitliche Dauer wird auch Impulsdauer genannt. Ferner ist auch ein Impuls möglich, der einem sog. Sweep entspricht, bei dem die Frequenz während der zeitlichen Dauer von einer Startfrequenz zu einer Endfrequenz ansteigt und/oder abfällt. Zudem ist ein Impuls möglich, bei dem mehrere unterschiedliche Frequenzen auftreten, die ebenfalls konstant sind oder jeweils variieren. Außerdem ist ein Impuls möglich, der innerhalb seiner zeitlichen Dauer mehrere Frequenzen aufweist, wobei eine oder mehrere der Frequenzen konstant bleiben und eine oder mehrere andere Frequenzen variieren. Eine Impulsfolge besteht dann aus mehreren Impulsen, die zeitlich direkt aufeinander, d.h. ohne zeitlichen Abstand, folgen.

Das ermittelte Referenzmuster entspricht z.B. im Wesentlichen einem Muster, das ein auftretender vorbestimmter Impuls oder eine auftretende vorbestimmte Impulsfolge im Spektrogramm erzeugt, wenn dieser im Empfangs- oder Gruppensignal des Spektrums auftritt. Das Spektrogramm sowie das Referenzmuster können hier auch als Bild, z.B. als Graustufenbild, betrachtet werden. Ein Funktionswert im Spektrogramm würde bei derartiger Betrachtung z.B. einem Bildpunkt und der Wert des Funktionswerts würde dann einem Grauton entsprechen.

Mit dem Referenzmuster wird ein vorbestimmter Impuls oder eine vorbestimmte Impulsfolge mittels Musterkennung im Spektrogramm oder in einem aus dem Spektrogramm abgeleiteten Bild gesucht. Es wird also das Referenzmuster mit Mitteln der Mustererkennung, die Teil der Bildverarbeitung ist, im Spektrogramm gesucht. Im Falle, dass das Referenzmuster im Spektrogramm detektiert bzw. erkannt wird, wird damit der vorbestimmte Impuls oder die vorbestimmte Impulsfolge im Gruppen- oder Empfangssignal des Spektrogramms detektiert.

Ferner betrifft die Erfindung eine Vorrichtung zur Detektion eines oder mehrerer vorbestimmter Impulse oder vorbestimmter Impulsfolgen in einem aus empfangenen Schallwellen ermittelten Empfangssignal oder in einem Gruppensignal, das aus Empfangssignalen, die aus empfangenen Schallwellen ermittelt werden, zusammengefasst ist. Dazu ist die Vorrichtung derart ausgebildet, um aus dem Gruppen- oder Empfangssignal ein Spektrogramm zu ermitteln und aus dem vorbestimmten Impuls oder der vorbestimmten Impulsfolge ein Referenzmuster zu ermitteln. Das Empfangssignal bzw. die Empfangssignale, aus denen das Gruppensignal ermittelt wird, werden z.B. mit elektroakustischen oder optoakustischen Empfängern aus Schallwellen erzeugt, die von den Empfängern empfangen werden. Zudem ist die Vorrichtung derart ausgebildet, um das Referenzmuster mit Mitteln der Mustererkennung im Spektrogramm oder in einem aus dem Spektrogramm abgeleiteten Bild zu suchen.

Vorteil des erfindungsgemäßen Verfahrens und der erfindungsgemäßen Vorrichtung ist, dass diese robust gegenüber durch Nachhall und durch andere Störgeräusche hervorgerufene Störungen bzw. Störsignale im Empfangssignal sind und selbst bei vergleichsweise hohem Anteil der Störsignale im Empfangssignal ein oder mehrere vorbestimmte Impulse oder vorbestimmte Impulsfolgen zuverlässig im Empfangs- oder Gruppensignal detektiert bzw. erkannt werden.

Gemäß einer weiteren vorteilhaften Weiterbildung des Verfahrens sowie der Vorrichtung wird das Spektrogramm ermittelt bzw. ist die Vorrichtung derart ausgebildet, um das Spektrogramm zu ermitteln, indem das Empfangssignal oder die Empfangssignale eines Gruppensignals mit einer festgelegten Abtastrate, z.B. mit einem Analog-Digital-Wandler, digitalisiert werden. Das durch die Digitalisierung erhaltene digitale Gruppen- oder Empfangssignal wird dann, z.B. mit einem Fensterbildner, in aufeinanderfolgende Zeitfenster jeweils eines Zeitbereichs der gleichen festgelegten Zeitdauer unterteilt. D.h. dass aus dem digitalen Gruppen- oder Empfangssignal einzelne Blöcke, also Zeitfenster, jeweils mit der gleichen Anzahl von Abtastwerten des Gruppen- oder Empfangssignals gebildet werden. Aufeinanderfolgende Zeitfenster enthalten aufeinanderfolgende Zeitbereiche des Gruppen- oder Empfangssignals. Jedes Zeitfenster weist somit mehrere Zeitpunkte eines Zeitbereichs auf, wobei der Abstand der Zeitpunkte durch die Abtastrate festgelegt ist und die Anzahl der Zeitpunkte in jedem Zeitfenster gleich groß ist, da jedes Zeitfenster die gleiche Zeitdauer umfasst.

Aus jedem Zeitfenster eines Zeitbereichs, des Gruppen- oder Empfangssignals, wird jeweils ein Spektrum, z.B. mit einem Spektralbildner, mit Mitteln zur Fourier-Transformation oder mit Mitteln zur schnellen Fourier-Transformation (FFT), ermittelt. Das jeweilige Spektrum umfasst dann den gleichen Zeitbereich, wie das Zeitfenster, aus dem das jeweilige Spektrum gebildet wurde. Weiter wird das Spektrogramm aus einer festgelegten Anzahl der Spektren mit aufeinanderfolgenden Zeitbereichen erzeugt.

Das Ermitteln des Spektrogramms durch Digitalisieren ist vorteilhaft, da die folgende Signalverarbeitung dadurch weniger rechenintensiv ist. Das Bilden von Zeitfenstern sowie das Bilden von Spektren aus den Zeitfenstern ist vorteilhaft, da durch die festgelegte Abtastrate und die festgelegte Zeitdauer jedes Spektrum im Spektrogramm die gleiche Zeitdauer umfasst und somit das Referenzmuster immer in ähnlicher Form im Spektrogramm gefunden bzw. detektiert oder erkannt werden kann, wenn der vorbestimmte Impuls oder die vorbestimmte Impulsfolge im Spektrogramm auftritt.

Gemäß einer weiteren vorteilhaften Weiterbildung des erfindungsgemäßen Verfahrens wird ein Sendesignal mit einem Sendeimpuls oder einer Sendeimpulsfolge gebildet. Mit dem Sendesignal werden Schallwellen erzeugt und die Schallwellen ab einem Sendezeitpunkt ausgesendet. Es wird also ein Sendesignal gebildet, das mindestens einen Sendeimpuls oder mindestens eine Sendeimpulsfolge aufweist, wobei der Sendeimpuls eine zeitliche Dauer umfasst, in der das Sendesignal ein oder mehrere im Wesentlichen konstante und/oder variierende Frequenzen aufweist. Das Sendesignal wird z.B. in elektroakustischen Wandlern oder Sender in Schallwellen umgewandelt und ausgesendet.

Ferner wird der zu detektierende Impuls oder die zu detektierende Impulsfolge vorbestimmt, indem dieser oder diese aus dem Sendeimpuls oder der Sendeimpulsfolge ermittelt wird. D.h. aus dem Sendeimpuls oder der Sendeimpulsfolge wird z.B. mit einer Übertragungsfunktion ein zu detektierender Impuls oder eine zu detektierende Impulsfolge bestimmt, die dem vorbestimmten Impuls oder der vorbestimmten Impulsfolge entspricht. Die Übertragungsfunktion entspricht z.B. einer mathematischen Darstellung eines erwarteten Übertragungskanals vom Sender, an dem das Sendesignal als Schallwelle ausgesendet wird, bis zum Empfänger, an dem das Empfangssignal als Schallwelle empfangen wird.

Ferner wird ein zeitlicher Abstand zwischen einem Zeitpunkt des oder der Zeitbereiche des Spektrogramms, in dem bzw. in denen der vorbestimmte Impuls oder die vorbestimmte Impulsfolgen detektiert wird, und dem Sendezeitpunkt bestimmt.

Gemäß einer vorteilhaften Weiterbildung der erfindungsgemäßen Vorrichtung ist diese derart ausgebildet, um ein Sendesignal mit einem Sendeimpuls oder einer Sendeimpulsfolge zu bilden. Mit dem Sendesignal werden dann, z.B. in einem Sender, Schallwellen erzeugt und diese Schallwellen ab einem Sendezeitpunkt ausgesendet. Ferner ist die Vorrichtung derart ausgebildet, um den zu detektierenden Impuls oder die zu detektierende Impulsfolge vorzubestimmen, indem der vorbestimmte Impuls oder die vorbestimmte Impulsfolge aus dem Sendeimpuls oder der Sendeimpulsfolge vorbestimmt wird. Ferner ist die Vorrichtung derart ausgebildet, um einen zeitlichen Abstand zwischen einem Zeitpunkt eines oder mehreren aufeinanderfolgender Zeitbereiche des Spektrogramms, in dem bzw. in denen der vorbestimmte Impuls oder die vorbestimmten Impulsfolge detektiert wird bzw. werden und dem Sendezeitpunkt zu bestimmen.

Das Bestimmen des zeitlichen Abstands, der der Laufzeit der Schallwellen vom Sender zum Empfänger entspricht, ist vorteilhaft, da bei gleichzeitiger Kenntnis der Ausbreitungsgeschwindigkeit damit der Abstand eines potentiellen Ziels bzw. eines rückstreuungsfähigen natürlichen oder technischen Objekts bestimmt werden kann.

Gemäß einer weiteren vorteilhaften Weiterbildung des erfindungsgemäßen Verfahrens sowie der erfindungsgemäßen Vorrichtung wird die festgelegte Zeitdauer jedes Zeitfensters derart gewählt, dass sich die zeitliche Dauer des vorbestimmten Impulses oder jedes der vorbestimmten Impulse einer Impulsfolge und die festgelegte Zeitdauer eines Zeitfensters gleichen. Ferner werden die Zeitbereiche der Zeitfenster, die aus dem Gruppensignal, z.B. mit einem Fensterbildner, gebildet werden, derart gewählt, dass ein oder mehrere auftretende Impulse im Gruppen- oder Empfangssignal jeweils im Wesentlichen in einem Zeitfenster auftreten.

Die o.g. Wahl der Zeitdauer der Zeitfenster sowie die Wahl der Zeitbereiche der Zeitfenster ist vorteilhaft, da somit im Spektrogramm in jedem Zeitbereich bzw. innerhalb jedes Spektrums im Wesentlichen ein Impuls auftritt und in dem jeweiligen Spektrum somit eindeutig die Frequenz oder die Frequenzen des jeweiligen Impulses dargestellt werden. Eine eindeutige Zuordnung eines Spektrums und damit eines Zeitbereichs zu einem Impuls ist somit möglich.

Gemäß einer weiteren vorteilhaften Weiterbildung des erfindungsgemäßen Verfahrens sowie der erfindungsgemäßen Vorrichtung weist das Spektrogramm Funktionswerte auf, wobei jeder Funktionswert einem Amplitudenwert eines Frequenzbereichs in einem Zeitbereich des Spektrogramms entspricht, also der Intensität bzw. Lautstärke der Frequenzen. Ferner ist es auch möglich, aus jedem Amplitudenwert durch mathematische Operationen mit einem Operator einen abgeleiteten Wert zu bestimmen, so dass jeder Funktionswert einem aus einem Amplitudenwert abgeleiteten Wert entspricht.

Die Funktionswerte des Spektrogramms können auch als Bildpunkte, z.B. eines Graustufenbildes, betrachtet werden, wobei jeder als Bildpunkt betrachtete Funktionswert einem Frequenzbereich und einem Zeitbereich zugeordnet ist. Der Frequenzbereich des jeweiligen Funktionswerts wird dabei in dem Bereich der Frequenzachse des Spektrogramms abgelesen, der dem Funktionswert des als Bildpunkt betrachteten Funktionswerts zugeordnet ist. Ferner ist dem als Bildpunkt betrachteten Funktionswert der Zeitbereich auf einer Zeitachse des Spektrogramms zugeordnet, der dem Funktionswert des als Bildpunkt betrachteten Funktionswerts zugeordnet ist. Der Funktionswert könnte dann z.B. als Graustufe des Bildpunktes, z.B. eines Graustufenbildes, dargestellt werden. So kann ein Bild aus einem Spektrogramm abgeleitet werden.

Ferner umfassen die Mittel zur Mustererkennung Mittel zur generalisierten Hough-Transformation. Gemäß der Weiterbildung des erfindungsgemäßen Verfahrens wird jeder Funktionswert bzw. jeder als Bildpunkt betrachtete Funktionswert des Spektrums mittels der Hough-Transformation und dem Referenzmuster jeweils in einen Bildpunkt eines Hough-Raums überführt. Gemäß der Weiterbildung der erfindungsgemäßen Vorrichtung ist diese derart ausgebildet, um jeden Funktionswert des Spektrums mit den Mitteln zur generalisierten Hough-Transformation und dem Referenzmuster in einen Hough-Raum zu überführen.

Die Funktionswerte des Spektrogramms mit einer Hough-Transformation und dem Referenzmuster in Bildpunkte eines Hough-Raums zu überführen, ist vorteilhaft, da im Hough-Raum Bildpunkte mit identifiziert werden können, die z.B. dunkler oder heller als die meisten übrigen Bildpunkte sind und die dadurch ein erkanntes Referenzmuster anzeigen.

Gemäß einer weiteren vorteilhaften Weiterbildung des erfindungsgemäßen Verfahrens sowie der erfindungsgemäßen Vorrichtung weist jeder Bildpunkt des Hough-Raums einen Wert auf, der bei Darstellung des Hough-Raums als Graustufenbild z.B. einer Graustufe entsprechen kann. Es wäre dazu z.B. möglich, einen Bildpunkt mit einem sehr geringen Wert als weißen Bildpunkt und einen Bildpunkt mit einem sehr hohen Wert als schwarzen Bildpunkt darzustellen.

Ferner werden jedem Bildpunkt des Hough-Raums ein Zeitbereich und ein Frequenzbereich zugewiesen. Hierbei wird jedem Bildpunkt genau der Zeitbereich und der Frequenzbereich zugewiesen, die dem Funktionswert des Spektrogramms zugewiesen sind, aus dem der jeweilige Bildpunkt durch Überführung des Funktionswertes bestimmt wurde. Es wäre somit z.B. denkbar, dass der Hough-Raum ebenfalls eine Frequenz und eine Zeitachse aufweist. Jeder aus einem Funktionswert überführte Bildpunkt würde dann die gleiche Position im Hough-Raum bzgl. der Zeitachse und der Frequenzachse wie der jeweilige Funktionswert im Spektrogramm aufweisen.

Für jeden Zeitbereich des Spektrogramms wird dann der Maximalwert bestimmt, der dem maximalen Wert der Werte der Bildpunkte des Hough-Raums entspricht, die dem jeweiligen Zeitbereich aber unterschiedlichen Frequenzbereichen zugeordnet sind. Der Maximalwert jedes Zeitbereichs wird daraufhin mit einem Schwellenwert verglichen. Liegt der jeweilige Maximalwert oberhalb des Schwellenwertes, so wird der Zeitbereich des Bildpunktes, der diesen Wert aufweist, als Zeitbereich im Spektrogramm erkannt, in dem das Referenzmuster auftritt.

Die Bestimmung eines Maximalwertes für jeden Zeitbereich ist vorteilhaft, da somit nur ein Wert pro Zeitbereich mit dem Schwellenwert verglichen werden muss und daher Rechenzeit gespart wird. Ferner ist der Vergleich mit einem Schwellenwert vorteilhaft, da eine fehlerhafte Detektion der vorbestimmten Impulse oder der vorbestimmten Impulsfolgen durch Einstellen des Schwellenwerts vermindert bzw. verhindert wird.

Gemäß einer weiteren vorteilhaften Weiterbildung des erfindungsgemäßen Verfahrens umfasst die Mustererkennung zusätzlich eine Kantendetektion, mittels der das Spektrogramm vor dem Überführen in den Hough-Raum in ein Kantenbild überführt wird. Ferner umfasst die Vorrichtung gemäß einer weiteren vorteilhaften Weiterbildung ein Mittel zur Kantendetektion, um das Spektrogramm vor der Überführung in den Hough-Raum in ein Kantenbild zu überführen.

Um das Spektrogramm in ein Kantenbild zu überführen, wird zunächst ein als Kantenbild zu betrachtendes Differenzspektrogramm gebildet. Dazu werden die Differenzen benachbarter Spektren des Spektrogramms berechnet und in das Differenzspektrogramm eingetragen. Genauer gesagt, werden die Differenzen der Funktionswerte des jeweiligen Spektrums eines zugrundegelegten Zeitbereichs mit dem zeitlich darauffolgenden oder vorhergehenden Spektrum, also dem Spektrum des darauffolgenden oder vorhergehenden Zeitbereichs, in ein Differenzspektrogramm für jeweils den zugrundegelegten Zeitbereich eingetragen. Hierdurch wird das Spektrogramm in ein Differenzspektrogramm überführt. Es werden dabei Funktionswerte gleicher Frequenzen benachbarter Spektren betrachtet und die Werte dieser Funktionswerte voneinander abgezogen. Die Differenzbildung wird immer in einer festen zeitlichen Richtung, also für jeden Zeitbereich mit dem jeweils darauffolgenden oder für jeden Zeitbereich mit dem jeweils vorhergehenden Zeitbereich ausgeführt.

Die Überführung des Spektrogramms in ein Kantenbild vor der Überführung in den Hough-Raum ist vorteilhaft, da Störsignale zu im Wesentlichen gleichen oder ähnlichen Funktionswerten führen, die dem jeweiligen Frequenzbereich dieser Störsignale zugeordnet sind. Durch die Differenzbildung werden dann gleiche oder ähnliche Werte benachbarter Spektren des Spektrogramms unterdrückt und somit die Erkennung des Referenzmusters verbessert.

Gemäß einer weiteren vorteilhaften Weiterbildung des erfindungsgemäßen Verfahrens sowie der erfindungsgemäßen Vorrichtung wird das Referenzmuster ermittelt, indem ein Referenzsignal mit dem vorbestimmten Impuls oder der vorbestimmten Impulsfolge gebildet wird. D.h. es wird ein Signal bzw. Referenzsignal gebildet, das entsprechend des vorbestimmten Impulses oder der vorbestimmten Impulsfolge eine oder mehrere Frequenzen aufweist. Dieses Referenzsignal wird mit der gleichen Abtastrate wie das oder die Empfangssignale digitalisiert. Ferner wird das Referenzsignal in Zeitfenster jeweils eines Zeitbereichs der gleichen Zeitdauer, wie die Zeitdauer der Zeitfenster des Gruppen- oder Empfangssignals, unterteilt. D.h. das Referenzsignal wird genau wie das Gruppen- oder Empfangssignal in gleichartige Zeitfenster eingeteilt.

Aus jedem Zeitfenster des Referenzsignals wird jeweils ein Spektrum ermittelt und mit den Spektren ein Referenzspektrum gebildet. Dieses Referenzspektrum weist insbesondere nur die benachbarten Frequenz- und Zeitbereiche des Frequenzbereichs und der zeitlichen Dauer des vorbestimmten Impulses oder der vorbestimmten Impulsfolge auf. Ferner wird das Referenzspektrum in das Referenzmuster überführt. Zum Überführen wird der oder werden die Funktionswerte des Referenzspektrums, die oberhalb eines Referenzwerts liegen, jeweils als Endpunkt eines Ortsvektors festgelegt. Ferner wird ein Referenzpunkt an einer beliebigen Position des Referenzmusters festgelegt. Der Startpunkt des oder jedes der Ortsvektoren entspricht dabei dem Referenzpunkt des Referenzspektrogramms. Der Referenzpunkt sowie die Ortsvektoren bilden dann das Referenzmuster, das insbesondere bei der Hough-Transformation eingesetzt wird.

Die Bildung eines Referenzmusters aus dem vorbestimmten Impuls oder der vorbestimmten Impulsfolge durch Ermitteln eines Referenzspektrogramms ist vorteilhaft, da somit auf einfache systematische Weise ein geeignetes Referenzmuster gebildet werden kann, das im Wesentlichen in derartiger Form im Spektrogramm vorkommen wird, wenn ein vorbestimmter Impuls und/oder eine vorbestimmte Impulsfolge in einem oder mehreren Zeitbereichen ein oder mehrfach im Spektrogramm vorkommt.

Ferner betrifft die Erfindung eine Aktivsonaranlage, insbesondere an einem Unterwasserfahrzeug, mit der erfindungsgemäßen Vorrichtung oder einer der Weiterbildungen der erfindungsgemäßen Vorrichtung, insbesondere zur Ausführung des erfindungsgemäßen Verfahrens oder einer Weiterbildung des erfindungsgemäßen Verfahrens. Ferner weist die Aktivsonaranlage mindestens einen Sender und mindestens einen Empfänger auf. Mit dem mindestens einen Sender wird z.B. mindestens ein Sendeimpuls oder einer Sendeimpulsfolge eines Sendesignals gebildet und als Schallwellen ausgesendet. Mit dem mindestens einen Empfänger werden z.B. die an rückstreuungsfähigen natürlichen oder technischen Objekten reflektierten Schallwellen empfangen und in ein oder mehrere Empfangssignale umgewandelt.

Die Aktivsonaranlage ist ferner derart ausgebildet, um in einem der Empfangs- oder einem aus den Empfangssignalen ermittelten Gruppensignal einen oder mehrere vorbestimmte Impulse oder vorbestimmte Impulsfolgen ein oder mehrfach zu detektieren. Der vorbestimmte Impuls oder die vorbestimmte Impulsfolge wird zum Detektieren aus dem Sendeimpuls oder der Sendeimpulsfolge des Sendesignals ermittelt, das mit dem Sender der Aktivsonaranlage als Schallwelle ausgesendet wird.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:
- Fig. 1: eine Vorrichtung zum Detektieren eines oder mehrerer vorbestimmter Impulse oder vorbestimmter Impulsfolgen in einem Empfangs- oder Gruppensignal gemäß einem Ausführungsbeispiel der Erfindung;
- Fig. 2: eine Impulsfolge;
- Fig. 3: ein Empfangs- oder Gruppensignal, das eine Impulsfolge aufweist;
- Fig. 4: das Spektrum eines Zeitfensters eines Gruppen- oder Empfangssignals;
- Fig. 5: ein Spektrogramm eines Gruppen- oder Empfangssignals;
- Fig. 6: eine weitere Darstellung eines Spektrogramms;
- Fig. 7: ein Differenzspektrogramm des Spektrogramms aus Fig. 6;
- Fig. 8: ein Referenzsignal, das aus einer vorbestimmten Impulsfolge erzeugt wird;
- Fig. 9: ein Referenzmuster;
- Fig. 10: das mit dem Referenzmuster aus Fig. 9 in den Hough-Raum überführte Spektrogramm aus Fig. 6;
- Fig. 11: Maximalwerte von Bildpunkten jeweils eines Zeitbereichs des Hough-Raums aus Fig. 10 und
- Fig. 12: ein Ausführungsbeispiel der erfindungsgemäßen Aktivsonaranlage.

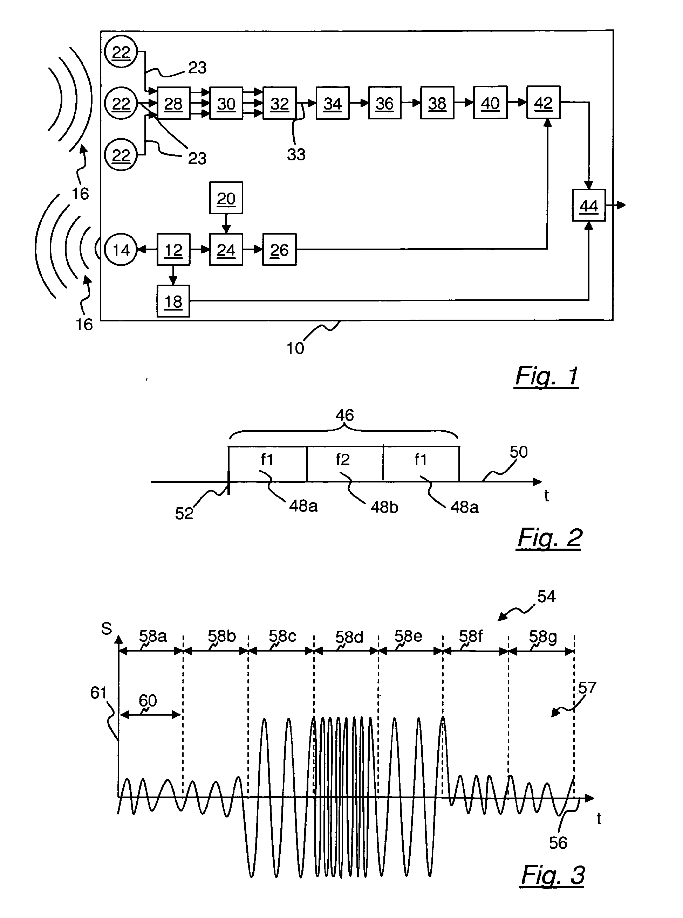

Fig. 1 zeigt ein Ausführungsbeispiel der erfindungsgemäßen Vorrichtung zur Ausführung eines Ausführungsbeispiels des erfindungsgemäßen Verfahrens. Dazu weist die Vorrichtung 10 einen Sendeimpulsgenerator 12 auf, der einen Sendeimpuls oder eine Sendeimpulsfolge generiert und mindestens einem Sender 14 zuführt. Der Sender 14 sendet den Sendeimpuls oder die Sendeimpulsfolge als Schallwellen 16 aus. Ein Sendezeitpunkt, ab dem der Sender 14 den Sendeimpuls oder die Sendeimpulsfolge aussendet, wird in einem Mittel zur Zeitpunktspeicherung 18 zwischengespeichert. Ferner weist die Vorrichtung 10 einen Kanalschätzer 20 auf, der eine Übertragungsfunktion für einen Sendekanal vom Sender 16 zu einem Empfänger 22 schätzt. Dieser Sendekanal würde von den Schallwellen 16 vom Sender 14 zum Empfänger 22 durchlaufen werden, wenn die Schallwellen z.B. von einem natürlichen oder technischen Objekt reflektiert werden. Die Übertragungsfunktion des Kanalschätzers 20 und der Sendeimpuls oder die Sendeimpulsfolge des Sendeimpulsgenerators 12 werden einem Mittel zur Impulsvorbestimmung 24 zugeführt. Im Mittel zur Impulsvorbestimmung 24 wird aus dem Sendeimpuls oder der Sendeimpulsfolge mit der Übertragungsfunktion ein Impuls oder eine Impulsfolge vorbestimmt. Aus dem vorbestimmten Impuls oder der vorbestimmten Impulsfolge wird in einem Referenzmusterbildner 26 ein Referenzmuster gebildet bzw. ermittelt.

Mehrere Empfänger 22 empfangen Schallwellen 16 und erzeugen daraus Empfangssignale 23. Die Empfangssignale 23 werden einem Signalaufbereiter 28 zugeführt, der die Empfangssignale 23 aufbereitet, indem die Empfangssignale 23 z.B. vorverstärkt, bzgl. ihrer Frequenz gemischt und tiefpassgefiltert werden. Die aufbereiteten Empfangssignale 23 werden nach der Aufbereitung einem Analog-Digital-Wandler 30 zugeführt, der die Empfangssignale 23 digitalisiert. Die aufbereiteten digitalisierten Empfangssignale 23 werden einem Richtungsbildner bzw. Beamformer 32 zugeführt, der aus den Empfangssignalen 23 mindestens ein Gruppensignal 33 erzeugt. Das Gruppensignal 33 wird einem Fensterbildner 34 zugeführt, der das Gruppensignal 33 in zeitlich aufeinanderfolgende Fenster einer festen Zeitdauer zerteilt. Jedes Zeitfenster des Gruppensignals 33 wird einer FFT-Einheit 36 zugeführt, die aus jedem Zeitfenster ein Spektrum, z.B. mit einer Fourier-Transformation oder einer schnellen Fourier-Transformation (FFT), erzeugt. Die einzelnen Spektren werden einem Spektrogrammbildner 38 zugeführt, der die Spektren zu einem Spektrogramm zusammensetzt. Das Spektrogramm wird dann einem Kantendetektor 40 zugeführt. Im Kantendetektor 40 wird aus dem Spektrogramm ein Differenzspektrogramm erzeugt, das einem Kantenbild, also einem aus dem Spektrogramm abgeleiteten Bild, entspricht.

Das Differenzspektrogramm sowie das Referenzmuster werden einem Mittel zur Mustererkennung 42 zugeführt. Mit dem Mittel zur Mustererkennung 42 wird dann das Referenzmuster im Differenzspektrogramm gesucht. Das Mittel zur Mustererkennung 42 kann ein beliebiges Mittel der Bildverarbeitung, z.B. ein Mittel zur Durchführung der generalisierten Hough-Transformation oder ein Mittel zum Template-Matching, sein. Die durch die Suche im Differenzspektrogramm ermittelten Zeitbereiche, in denen das Referenzmuster auftritt, sowie der zwischengespeicherte Sendezeitpunkt des Mittels zur Zeitpunktspeicherung 18 werden einem Laufzeitanalysator 44 zugeführt. Der Laufzeitanalysator 44 bestimmt dann eine oder mehrere Laufzeiten, die der Sendeimpuls oder die Sendeimpulsfolge vom Sender 16 bis zum Empfänger 22 benötigt hat, und gibt diese aus.

Fig. 2 zeigt eine Sendeimpulsfolge 46 bestehend aus drei Sendeimpulsen 48a, 48b. Die Sendeimpulse 48a entsprechen dabei jeweils der konstanten Frequenz f1. Der Sendeimpuls 48b entspricht der konstanten Frequenz f2. Ferner zeigt Fig. 2 eine Zeitachse 50, auf der ein Sendezeitpunkt 52 dargestellt ist. Ab einem Zeitpunkt 52 wird die Sendeimpulsfolge 46 mit einem Sender 14 ausgesendet bzw. wird damit begonnen die Sendeimpulsfolge auszusenden.

Fig. 3 zeigt schematisch den zeitlichen Verlauf eines Empfangs- oder Gruppensignals 54. Das Empfangs- oder Gruppensignal 54 entspricht z.B. einem mit mindestens einem Empfänger 22 empfangenen Empfangssignal 23 oder einem aus mehreren Empfangssignalen 23 ermittelten Gruppensignal 33. Die Fig. 3 zeigt eine Zeitachse 56, die in Zeitfenster 57 jeweils eines Zeitbereichs 58a bis 58g eingeteilt ist. Für jeden der gleich großen Zeitbereiche 58a bis 58g, die also jeweils die gleiche Zeitdauer 60 aufweisen, wird jeweils ein Spektrum gebildet. Die Signalstärke S des Empfangs- oder Gruppensignals 54 ist auf der Achse 61 dargestellt.

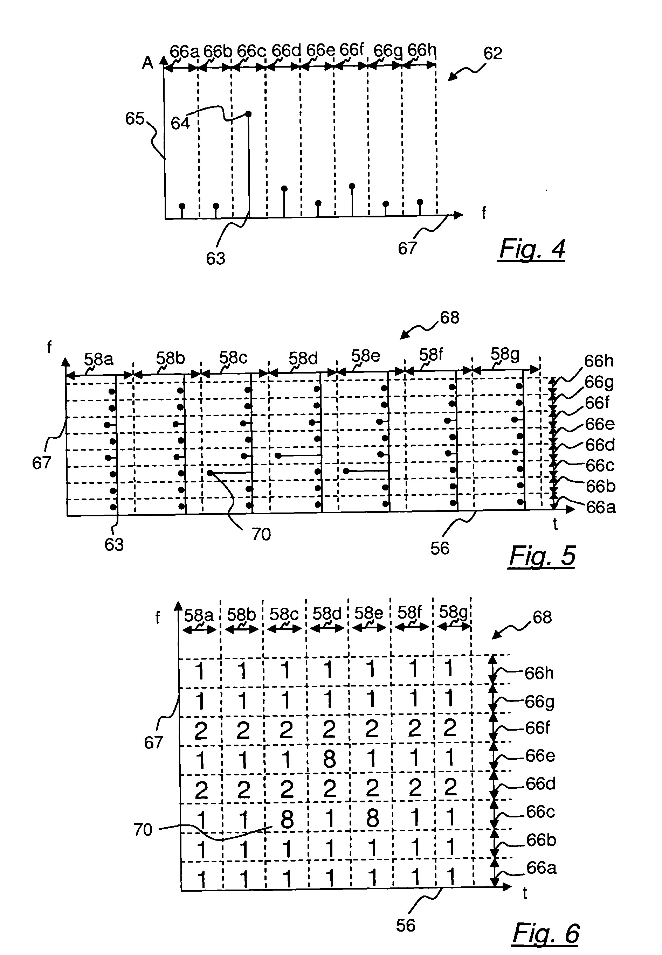

Fig. 4 zeigt ein schematisch dargestelltes Spektrum 62 eines der Zeitbereiche 58a bis 58g aus Fig. 3. Das Spektrum 62 zeigt einzelne Spektrallinien 63, die jeweils einem Amplitudenwert 64, der auf der Amplitudenachse 65 abgelesen werden kann, und einem Frequenzbereich 66a bis 66h, der auf der Frequenzachse 67 abgelesen werden kann, zugeordnet sind. Hier und im Weiteren wird von Amplitudenwerten gesprochen, wobei ein Amplitudenwert auch immer einem aus dem Amplitudenwert abgeleiteten Wert entsprechen kann. Ein aus dem Amplitudenwert abgeleiteter Wert ist ein durch mathematische Operationen, etwa durch Quadrierung oder Addition mit einem weiteren Operator, ermittelter Wert.

Fig. 5 zeigt eine exemplarische Darstellung des Empfangs- oder Gruppensignals 54 aus Fig. 3 als Spektrogramm 68. Hierbei entspricht die dargestellte Zeitachse 56 der Zeitachse 56 aus Fig. 3 und die Frequenzachse 67 der Frequenzachse 67 aus Fig. 4. In dem Spektrogramm ist in jedem Zeitbereich 58a bis 58g jeweils ein Spektrum 62 eingetragen. Das Spektrogramm 68 weist in jedem Zeitbereich 58a bis 58g Funktionswerte 70 auf. Die Funktionswerte 70 entsprechen dabei jeweils einer Spektrallinie 63 eines Frequenzbereichs 66a bis 66h in einem Zeitbereich 58a bis 58g. Das Spektrogramm 68 wird aus einer festgelegten Anzahl von Spektren 62 aufeinanderfolgender Zeitbereiche 58a bis 58g erzeugt. Die festgelegte Anzahl wird durch Faktoren wie z.B. die Anzahl oder die zeitlichen Abstände sowie die zeitlichen Dauern der Impulse oder Impulsfolgen festgelegt. Durch Festlegen der Anzahl der Spektren 62 eines Spektrogramms 68 wird somit die gesamte zeitliche Dauer des Spektrogramms festgelegt.

Fig. 6 zeigt eine alternative Darstellung des Spektrogramms 68 aus Fig. 5, wobei hier jeder Funktionswert 70 als Zahlenwert dargestellt ist. D.h. Fig. 6 zeigt wieder dieselbe Frequenzachse 67 und die gleiche Zeitachse 56 wie Fig. 5. Ebenfalls entsprechen die Zeitbereiche 58a bis 58g in Fig. 6 den Zeitbereichen 58a bis 58g in Fig. 5 und Fig. 3 und die Frequenzbereiche 66a bis 66h den Frequenzbereichen 66a bis 66h in Fig. 4 und Fig. 5. Das Spektrogramm 68 in Fig. 6 ist mit Zahlenwerten dargestellt. Es wäre aber auch denkbar, die Zahlenwerte der Funktionswerte 70 durch Bildpunkte mit unterschiedlichen Graustufen darzustellen. Dazu wäre z.B. ein geringer Amplitudenwert 64 eines Funktionswerts 70 sehr hell und ein hoher Amplitudenwert 64 sehr dunkel darzustellen. Dadurch würde sich ein Graustufenbild ergeben, das einer alternativen Darstellung des Spektrogramms 68 aus Fig. 5 und 6 entspricht und als Bild betrachtet werden kann. Jeder Funktionswert 70 würde dann z.B. einem als Bildpunkt betrachteten Funktionswert 70 in einem als Bild betrachteten Spektrogramm 68 entsprechen.

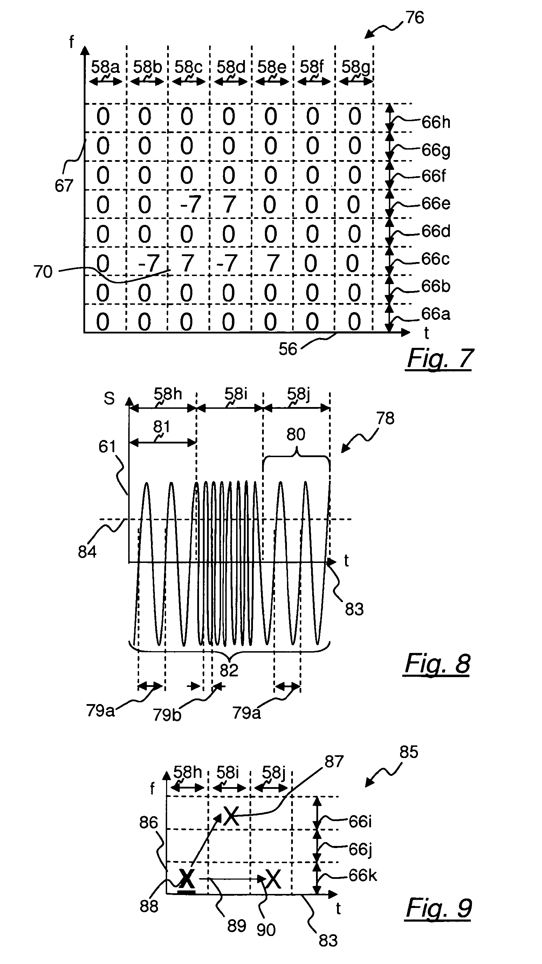

Fig. 7 zeigt ein Kantenbild 76. Das Kantenbild 76 einspricht einem aus dem Spektrogramm abgeleiteten Bild bzw. einem Differenzspektrogramm 76, das z.B. mit dem Kantendetektor 40 aus dem Spektrogramm 68 ermittelt wurde. Das Kantenbild 76 weist ebenfalls die gleiche Frequenzachse 67 mit den gleichen Frequenzbereichen 66a bis 66h der Spektrogramme aus Fig. 5 und Fig. 6 sowie die gleiche Zeitachse 56 mit den gleichen Zeitbereichen 58a bis 58g auf.

In Fig. 7 wird für jeden Zeitbereich die Differenz der Funktionswerte 70 des Spektrums 62 eines jeweils zugrundegelegten Zeitbereichs und der Funktionswerte 70 des Spektrums 62 des darauffolgenden Zeitbereichs 58a bis 58g ermittelt und in den zugrundegelegten Zeitbereich eingetragen. Es wird z.B. in dem Zeitbereich 58a die Differenz zwischen dem Zeitbereich 58a und dem Zeitbereich 58b eingetragen. In den Zeitbereich 58b wird die Differenz zwischen dem Zeitbereich 58b und dem Zeitbereich 58c eingetragen. In den Zeitbereich 58c wird die Differenz zwischen dem Zeitbereich 58c und dem Zeitbereich 58d eingetragen.

Dies wird bis zum vorletzten Zeitbereich fortgesetzt. Der letzte Zeitbereich 58g wird dann, wie in Fig. 7 dargestellt ist, z.B. zu Null gesetzt. "Differenz zwischen den Zeitbereichen" bedeutet hier, dass z.B. die Amplitudenwerte 64 eines Spektrums 62 eines auf einen zugrundegelegten Zeitbereich folgenden Zeitbereichs von den Amplitudenwerten 64 eines Spektrums 62 des zugrundegelegten Zeitbereichs 58a bis 58g abgezogen werden. Die durch diese Differenzbildung erhaltenen neuen Differenzwerte werden in dem zugrundegelegten Zeitbereich eingetragen.

Fig. 8 zeigt ein Referenzsignal 78 bzw. ein Referenzsignal 78, das aus der Sendeimpulsfolge 46 in Fig. 2 ermittelt wird. Das Referenzsignal 78 ist in drei Zeitbereiche 58h bis 58j unterteilt, wobei in jedem der Zeitbereich 58h bis 58j jeweils eine im Wesentliche konstante Frequenz 79a, 79b eines vorbestimmten Impulses 80 mit jeweils einer zeitlichen Dauer 81 dargestellt ist. Im gesamten Zeitbereich 58h bis 58j ist somit eine vorbestimmte Impulsfolge 82 dargestellt. Das Referenzsignal 78 ist über eine Zeitachse 83 dargestellt, wobei das Referenzsignal 78 zu jedem Zeitpunkt eine Signalstärke S aufweist, die auf einer Achse 61 dargestellt ist. Die zeitliche Dauer 81 jedes Zeitbereichs 58h bis 58j entspricht der Zeitdauer 60 der Zeitbereiche 58a bis 58g z.B. in Fig.3. Ferner ist ein Referenzwert 84 der Signalstärke S dargestellt.

Fig. 9 zeigt ein Referenzmuster 85, das aus einem Referenzsignal 78 ermittelt wird. Dazu wird das Referenzsignal 78 zunächst in gleicher Weise in ein Referenzspektrogramm, wie das Empfangssignal 54 in Fig. 3 in das Spektrogramm 68 in Fig. 6, überführt. Dazu wird jeder Zeitbereich 58h bis 58j zunächst in ein Spektrum, z.B. mit einer FFT-Einheit 36, überführt und aus den Spektren das Referenzspektrogramm ermittelt.

Die Zeitachse 83 und die Zeitbereiche 58h bis 58j in Fig. 9 entsprechen der Zeitachse 83 und den Zeitbereichen 58h bis 58j in Fig. 8. Ferner ist eine Frequenzachse 86 dargestellt, die zusammenhängenden Frequenzbereiche 66i bis 66k umfasst. Der Gesamtfrequenzbereich bzw. die Bandbreite der Frequenzbereiche 66i bis 66h ist auf den Bereich begrenzt, in dem das Referenzsignal 78 Frequenzen mit einem Amplitudenwert oberhalb des festgelegten Referenzwerts 84 aufweist. Die Frequenzbereiche 66i bis 66k des Referenzmusters 85 entsprechen jeweils der gleichen Bandbreite jeweils eines Frequenzbereichs 66a bis 66h in Fig. 6. Das Referenzmuster 85 weist durch X gekennzeichnete Bildpunkte 87 auf, die Funktionswerten 70 des aus dem Referenzsignal 78 ermittelten Referenzspektrogramms mit Amplitudenwerten oberhalb des Referenzwerts 84 entsprechen.

Beim Referenzmuster 85 ist unerheblich, welche genauen Amplitudenwerte 64 die Funktionswerte 70 aufweisen, da das Referenzmuster 85 unabhängig von den genauen Amplitudenwerten der Frequenzen eines zuvor gebildeten Referenzsignals 78 in einem Spektrogramm 68 erkannt werden soll. Es müssen daher lediglich zu beachtende Frequenzen mit dem Referenzwert 84 erkannt und für das Ermitteln des Referenzmusters herangezogen werden.

Ferner wird zum Ermitteln eines Referenzmusters 85 für eine Hough-Transformation oder für eine generalisierte Hough-Transformation einer der Bildpunkte 87 als Referenzpunkt 88 ausgewählt. Der Referenzpunkt 88 entspricht dabei einem Startpunkt. Von diesem Startpunkt aus werden Ortsvektoren 89 zu jedem Endpunkt 90 gebildet, deren Endpunkt 90 also jeweils auf einem der Bildpunkte 87 liegt. Diese Ortsvektoren 86 mit dem Referenzpunkt 88 entsprechen einem Referenzmuster für eine Hough-Transformation oder für eine generalisierte Hough-Transformation. Es kann jedoch auch bereits die Anordnung der als X gekennzeichneten Bildpunkt 87 und des als X gekennzeichneten Referenzpunktes 88 als Referenzmuster 85 betrachtet werden. Ein Spektrogramm würde mit diesem Referenzmuster 85 z.B. beim Template-Matching oder bei einem anderen Verfahren zur Mustererkennung abgesucht werden.

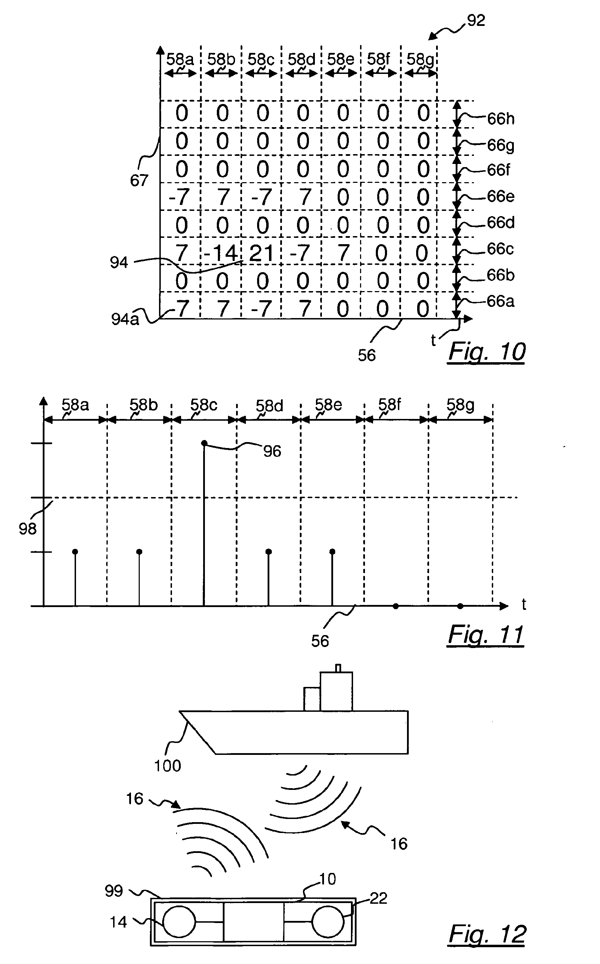

Fig. 10 zeigt einen Hough-Raum 92, der aus dem Kantenbild 76 in Fig. 7 mit dem Referenzmuster aus Fig. 9 ermittelt wird. Der Hough-Raum 92 ist dabei mit einer generalisierten Hough-Transformation erzeugt bzw. ermittelt worden. Dazu wird das Referenzmuster 85 mit dem Referenzpunkt 88 nacheinander auf jeden Funktionswert 70 des Kantenbilds 76 gelegt. Der Funktionswert 70 der Funktionswerte, auf den der Referenzpunkt 88 gerade gelegt wird, wird durch eine Summe ersetzt, die aus diesem jeweiligen Funktionswert 70 und dem oder den Funktionswerten 70, auf den oder die die Ortsvektoren 89 bzw. deren Endpunkte 90 des Referenzmusters 85 zeigen, gebildet bzw. ermittelt wird. Hierbei wird das Referenzmuster 85 mit dem Referenzpunkt 88 zunächst auf den Funktionswert 70 mit dem ersten Zeitbereich 58a und dem niedrigsten Frequenzbereich 66a gelegt und nach der Summenbildung auf den nächst höheren Frequenzbereich 66b verschoben. Dies setzt sich bis zum höchsten Frequenzbereich 66h fort. Danach wird die Summenbildung vom Funktionswert 70 mit dem niedrigsten Frequenzbereich 66a bis zum Funktionswert 70 mit dem höchsten Frequenzbereich 66h des nachfolgenden Zeitbereichs 58b gebildet. Dies setzt sich fort, bis jeder Funktionswert 70 des Spektrogramms 68 in den Hough-Raum 92 überführt ist. Endpunkte 90 der Ortsvektoren 89, die außerhalb des Kantenbilds 76 liegen, werden zu Null gesetzt.

Der in Fig. 10 dargestellte Hough-Raum 92 weist Bildpunkte 94 auf, wobei jedem Bildpunkt 94 einer der Zeitbereiche 58a bis 58g sowie einer der Frequenzbereiche 66a bis 66h zugeordnet ist. Jedem Bildpunkt 94 wird also genau der Zeitbereich 58a bis 58g und der Frequenzbereich 66a bis 66h zugeordnet, der dem Funktionsargument 70 entspricht, das für die Berechnung des jeweiligen Bildpunktes 94 zugrundegelegt wurde. D. h. dem Bildpunkt 94a ist z.B. der Zeitbereich 58a sowie der Frequenzbereich 66a des Funktionswerts 70 aus Fig. 6 zugeordnet, der in Fig. 6 dem ersten Zeitbereich 58a sowie dem niedrigsten Frequenzbereich 66a zugeordnet ist. Demnach zeigt Fig. 10 die gleiche Zeitachse 56 sowie die gleiche Frequenzachse 67 wie Fig. 6. Hier ist der Hough-Raum 92 aus dem Kantenbild 76 erzeugt worden, wobei es auch möglich ist, dem Hough-Raum direkt aus dem Spektrogramm 68 aus Fig. 6 zu erzeugen.

Fig. 11 zeigt Maximalwerte 96 der Bildpunkte 94 des Hough-Raums 92 für jeweils jeden Zeitbereich 58a bis 58g. Dazu weist Fig. 11 wieder eine Zeitachse 56 auf, die der Zeitachse 56 in Fig. 6 entspricht. In jedem Zeitbereich 58a bis 58g der Fig. 11 ist jeweils der Maximalwert 96 des jeweiligen Zeitbereichs 58a bis 58g der Bildpunkte 94 aus Fig. 10 eingetragen. Ferner ist ein Schwellenwert 98 dargestellt. Im Zeitbereich 58c zeigt der Maximalwert 96 der Bildpunkte 94 in diesem Zeitbereich 58c einen Wert auf, der oberhalb des Schwellenwerts 98 liegt. Das bedeutet, dass das Referenzmuster in diesem Zeitbereich im Spektrogramm 68 in Fig. 6 detektiert wurde. Hier bedeutet ein "in diesem Zeitbereich detektiertes Referenzmuster 85", dass der Referenzpunkt 88 des Referenzmusters 85 in diesem Zeitbereich detektiert wurde. Das gesamte Referenzmuster 85 wird dann zusätzlich in den Zeitbereichen 58a bis 58g detektiert, in die die Ortsvektoren 89 von diesem Referenzpunkt 88 aus zeigen.

Gemäß der Hough-Transformation wird daher das Referenzmuster 85 bzw. der Referenzpunkt 88 des Referenzmusters 85 in diesem Zeitbereich 58c und somit auch die vorbestimmte Impulsfolge 82 bzw. der Beginn der Impulsfolge 82 in diesem Bereich detektiert. Durch Bestimmen des zeitlichen Abstands zwischen z.B. dem ersten Zeitpunkt des Zeitbereichs 58c und dem Sendezeitpunkt 52 kann nun darauf geschlossen werden, wie lange die aus der Sendeimpulsfolge 46 erzeugten Schallwellen vom Sender 16 bis zum Empfänger 22 benötigt haben.

Fig. 12 zeigt ein Ausführungsbeispiel der erfindungsgemäßen Aktivsonaranlage 99, die mit einem Sender 14 Schallwellen 16 aussendet, wobei die Schallwellen aus einem Sendesignal mit einem Sendeimpuls 48 oder einer Sendeimpulsfolge 46 erzeugt werden. Die Schallwellen 16 werden dann an einem rückstreuungsfähigen natürlichen oder technischen Objekt 100 reflektiert und mit einem Empfänger 22 oder mehreren Empfänger 22 der Aktivsonaranlage 99 empfangen. Die empfangenen Schallwellen werden dann mit einem der Ausführungsbeispiele des erfindungsgemäßen Verfahrens in einem Ausführungsbeispiel der erfindungsgemäßen Vorrichtung 10 untersucht.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Detektieren eines oder mehrerer vorbestimmter Impulse (80) oder vorbestimmter Impulsfolgen (82) in einem aus empfangenen Schallwellen(16) ermittelten Empfangssignal (23) oder mehreren zu einem Gruppensignal (33) zusammengefassten, aus empfangenen Schallwellen (16) ermittelten Empfangssignalen (23), wobei die Schallwellen (16) aus einem Sendesignal mit mindestens einer Sendeimpulsfolge (46) erzeugt werden, wobei eine vorbestimmte Impulsfolge (82) mehrere zeitlich direkt aufeinanderfolgende vorbestimmte Impulse (80) und ein vorbestimmter Impuls (80) eine zeitliche Dauer (81) umfasst, in der das Gruppen- oder Empfangssignal (54) eine im Wesentlichen konstante oder variierende Frequenz (79a oder 79b) oder mehrere jeweils im Wesentlichen konstante und/oder variierende Frequenzen (79a und 79b) aufweist, wobei aus dem Gruppen- oder Empfangssignal (54) ein Spektrogramm (68) und aus der vorbestimmten Impulsfolge (82) ein Referenzmuster (85) ermittelt wird und das Referenzmuster (85) mittels Mustererkennung im Spektrogramm (68) oder einem aus dem Spektrogramm (68) abgeleiteten Bild gesucht wird, um den vorbestimmten Impuls (80) oder die vorbestimmte Impulsfolge (82) ein- oder mehrfach in Gruppen oder Empfangssignale (54) des Spektrogramms (68) oder dem aus dem Spektrogramm abgeleiteten Bild zu detektieren, wenn das Referenzmuster (85) ein- oder mehrfach im Spektrogramm (68) oder dem abgeleiteten Bild erkannt wird, **dadurch gekennzeichnet, dass** das Sendesignal mit mindestens einer Sendeimpulsfolge (46) durch einen einzelnen Sender (14) gebildet wird.

2. Verfahren nach Anspruch 1, **dadurch gekennzeichnet, dass** das Spektrogramm (68) ermittelt wird, indem das Gruppen- oder Empfangssignal (54) in aufeinanderfolgende Zeitfenster (57) jeweils eines Zeitbereichs (58a bis 58g) der gleichen festgelegten Zeitdauer (60) unterteilt wird, und aus jedem Zeitfenster (57) eines Zeitbereichs (58a bis 58g) jeweils ein Spektrum (62) ermittelt wird, wobei dem Spektrum (62) der gleiche Zeitbereich (58a bis 58g) des jeweiligen beim Ermitteln des Spektrums (62) zugrundegelegten Zeitfensters (57) zugeordnet wird, und das Spektrogramm (68) mit einer festgelegten Anzahl der Spektren (62) aufeinanderfolgender Zeitbereiche (58a bis 58g) ermittelt wird, wobei jedem Zeitbereich (58a bis 58g) des Spektrogramms (68) jeweils der Zeitbereich (58a bis 58g) des jeweiligen Spektrums (62) in diesem jeweiligen Zeitbereich (58a bis 58g) zugeordnet wird.

3. Verfahren nach Anspruch 1 oder 2, **dadurch gekennzeichnet, dass** die festgelegte Zeitdauer (60) eines Zeitfensters (57) derart gewählt wird, dass sich die zeitliche Dauer (81) des vorbestimmten Impulses (80) oder jedes der vorbestimmten Impulse (80) einer Impulsfolge (82) und die festgelegte Zeitdauer (60) eines Zeitfensters (57) gleichen und die Zeitbereiche (58a bis 58g) der Zeitfenster (57) im Gruppen- oder Empfangssignal (54) derart gewählt werden, dass jeder im Gruppen- oder Empfangssignal (54) auftretende Impuls (80) im Wesentlichen innerhalb eines Zeitfensters (57) liegt.

4. Verfahren nach einem der vorherigen Ansprüche, wobei das Sendesignal mit mindestens dem Sendeimpuls (48a, 48b) oder mindestens der Sendeimpulsfolge (46) gebildet wird, mit dem Sendesignal Schallwellen (16) erzeugt und die Schallwellen (16) ab einem oder mehreren Sendezeitpunkten (52) ausgesendet werden, der vorbestimmte Impuls (80) oder die vorbestimmte Impulsfolge (82) vorbestimmt wird, indem dieser oder diese aus dem Sendeimpuls (48a, 48b) oder der Sendeimpulsfolge (46) ermittelt wird, und jeweils der oder die Zeitpunkte des oder der Zeitbereiche (58a bis 58g) des Spektrogramms (68), in dem oder in denen der vorbestimmte Impuls (80) oder die vorbestimmten Impulsfolge (82) detektiert wird, bestimmt werden.

5. Verfahren nach einem der vorherigen Ansprüche, **dadurch gekennzeichnet, dass** das Spektrogramm (68) Zeitbereiche (58a bis 58g), Frequenzbereiche (66a bis 66h) und Funktionswerte (70) aufweist, wobei jeder Funktionswert (70) einem Amplitudenwert (64) oder einem aus einem Amplitudenwert (64) abgeleiteten Wert eines Frequenzbereichs (66a bis 66h) eines Zeitbereichs (58a bis 58g) des Spektrogramms (68) entspricht, die Mustererkennung eine generalisierte Hough-Transformation umfasst und mittels der generalisierten Hough-Transformation und dem Referenzmuster (85) jeder Funktionswert (70) des Spektrogramms (68) in einen Bildpunkt (94) eines Hough-Raums (92) überführt wird.

6. Verfahren nach Anspruch 5, **dadurch gekennzeichnet, dass** jeder Bildpunkt (94) des Hough-Raums (92) einen Wert aufweist und jedem Bildpunkt (94) jeweils der Zeitbereich (58a bis 58g) des in den jeweiligen Bildpunkt (94) überführten Funktionswertes (70) zugeordnet wird und für jeden Zeitbereich (58a bis 58g) des Spektrogramms (68) der Maximalwert (96) der Werte der Bildpunkte (94), die dem jeweiligen Zeitbereich (58a bis 58g) zugeordnet sind, bestimmt wird und das Referenzmuster in dem oder den Zeitbereichen (58a bis 58g) erkannt wird, bei dem oder denen der jeweilige Maximalwert (96) oberhalb eines Schwellenwertes (98) liegt.

7. Verfahren nach Anspruch 5 oder 6, **dadurch gekennzeichnet, dass** die Mustererkennung eine Kantendetektion umfasst und das Spektrogramm (68) vor dem Überführen in den Hough-Raum (92) in ein Kantenbild (76) und daraufhin das Kantenbild (76) in den Hough-Raum (92) überführt wird, wobei das Kantenbild (76) oder ein dem Kantenbild (76) entsprechendes Differenzspektrogramm gebildet wird, indem in alle Zeitbereiche (58a bis 58g) jeweils die Differenz der Funktionswerte (70) eines jeweils zugrundegelegten Zeitbereichs und der Funktionswerten (70) eines jeweils zeitlich darauffolgenden oder vorhergehenden Zeitbereichs mit gleichen Frequenzbereichen (66a bis 66h) in das Differenzspektrogramm jeweils für den zugrundegelegten Zeitbereich eingetragen werden.

8. Verfahren nach einem der Ansprüche 5 bis 7, **dadurch gekennzeichnet, dass** das Referenzmuster (85) ermittelt wird, indem ein Referenzsignal (78) mit dem vorbestimmten Impuls (80) oder der vorbestimmten Impulsfolge (82) gebildet, in Zeitfenster (57) jeweils eines Zeitbereichs (58h bis 58j) mit der gleichen Zeitdauer (60) wie die Zeitfenster (57) des Gruppen- oder Empfangssignals (54) zerteilt, aus jedem Zeitfenster (57) jeweils ein Referenzspektrum ermittelt und mit den Referenzspektren ein Referenzspektrogramm gebildet wird und das Referenzspektrogramm in das Referenzmuster (85) überführt wird, indem der oder die Funktionswerte (70) des Referenzspektrogramms oberhalb eines Referenzwerts (84) als der oder die Endpunkte (90) eines oder jeweils eines Ortsvektors (89) und der Startpunkt des oder der Ortsvektoren als ein Referenzpunkt (88) gewählt werden und der oder die Ortsvektoren (89) und der Referenzpunkt (88) das Referenzmuster (85) bilden.

9. Vorrichtung zur Detektion eines oder mehrerer vorbestimmter Impulse (80) oder vorbestimmter Impulsfolgen (82) in einem aus empfangenen Schallwellen (16) ermittelten Empfangssignal (23) oder mehreren zu einem Gruppensignal (33) zusammengefassten, aus empfangenen Schallwellen (16) ermittelten Empfangssignalen (23), wobei die Schallwellen (16) aus einem Sendesignal mit mindestens einer Sendeimpulsfolge (46) erzeugt werden, wobei eine vorbestimmte Impulsfolge (82) mehrere zeitlich direkt aufeinanderfolgende vorbestimmte Impulse (80) und ein vorbestimmter Impuls (80) eine zeitliche Dauer (81) umfasst, in der das Gruppen- oder Empfangssignal (54) eine im Wesentlichen konstante oder variierende Frequenz (79a oder 79b) oder mehrere jeweils im Wesentlichen konstante und/oder variierende Frequenzen (79a und 79b) aufweist, wobei die Vorrichtung derart ausgebildet ist, um aus dem Gruppen- oder Empfangssignal (54) ein Spektrogramm (68) und aus der vorbestimmten Impulsfolge (82) ein Referenzmuster (85) zu ermitteln und um das Referenzmuster (85) mit Mitteln zur Mustererkennung (42) im Spektrogramm (68) oder einem aus dem Spektrogramm (68) abgeleiteten Bild zu suchen, um den vorbestimmten Impuls (80) oder die vorbestimmte Impulsfolge (82) ein oder mehrfach im Gruppen- oder Empfangssignal (54) des Spektrogramms (68) oder dem aus dem Spektrogramm abgeleiteten Bild zu detektieren, wenn das Referenzmuster (85) ein oder mehrfach im Spektrogramm (68) oder dem abgeleiteten Bild erkannt wird, **dadurch gekennzeichnet, dass** das Sendesignal mit mindestens einem Sendeimpuls (48a, 48b) oder mindestens einer Sendeimpulsfolge (46) durch einen einzelnen Sender (14) gebildet wird.

10. Vorrichtung nach Anspruch 9, **dadurch gekennzeichnet, dass** die Vorrichtung derart ausgebildet ist, um das Spektrogramm (68) zu ermitteln, indem die Vorrichtung derart ausgebildet ist, um das Gruppen- oder Empfangssignal (54) in aufeinanderfolgende Zeitfenster (57) jeweils eines Zeitbereichs (58a bis 58g) der gleichen festgelegten Zeitdauer (60) zu unterteilen, um aus jedem Zeitfenster (57) eines Zeitbereichs (58a bis 58g) jeweils ein Spektrum (62) zu ermitteln, wobei die Vorrichtung derart ausgebildet ist, um dem Spektrum den gleichen Zeitbereich (58a bis 58g) des jeweiligen beim Ermitteln zugrundegelegten Zeitfensters (57) zuzuordnen, und die Vorrichtung derart ausgebildet ist, um das Spektrogramm (68) mit einer festgelegten Anzahl der Spektren (62) aufeinanderfolgender Zeitbereiche (58a bis 58g) zu ermitteln, wobei die Vorrichtung derart ausgebildet ist, um jedem Zeitbereich (58a bis 58g) des Spektrogramms (68) jeweils den Zeitbereich (58a bis 58g) des jeweiligen Spektrums (62) in diesem jeweiligen Zeitbereich (58a bis 58g) zuzuordnen.

11. Vorrichtung nach Anspruch 9 oder 10, **dadurch gekennzeichnet, dass** die Vorrichtung derart ausgebildet ist, um die festgelegte Zeitdauer (60) eines Zeitfensters (57) derart zu wählen, dass sich die zeitliche Dauer (81) des vorbestimmten Impulses (80) oder jedes der vorbestimmten Impulse (80) einer Impulsfolge (82) und die festgelegte Zeitdauer (60) eines Zeitfensters (57) gleichen und die Vorrichtung derart ausgebildet ist, um die Zeitbereiche (58a bis 58g) der Zeitfenster (57) im Gruppen- oder Empfangssignal (54) derart zu wählen, dass jeder im Gruppen- oder Empfangssignal (54) auftretende Impuls (80) im Wesentlichen innerhalb eines Zeitfensters (57) liegt.

12. Vorrichtung nach einem der Ansprüche 9 bis 11, **dadurch gekennzeichnet, dass** die Vorrichtung derart ausgebildet ist, um das Sendesignal mit mindestens dem Sendeimpuls (48a, 48b) oder mindestens der Sendeimpulsfolge (46) zu bilden, mit dem Sendesignal Schallwellen zu erzeugen und die Schallwellen (16) ab einem oder mehreren Sendezeitpunkten (52) auszusenden, den vorbestimmten Impuls (80) oder die zu vorbestimmte Impulsfolge (82) vorzubestimmen, indem dieser oder diese aus dem Sendeimpuls (48a, 48b) oder der Sendeimpulsfolge (46) ermittelt wird, und um jeweils den oder die Zeitpunkte des oder der Zeitbereiche (58a bis 58g) des Spektrogramms, in dem der vorbestimmte Impuls (80) oder die vorbestimmten Impulsfolge (82) detektiert wird, zu bestimmen.

13. Vorrichtung nach einem der Ansprüche 9 bis 12, **dadurch gekennzeichnet, dass** das Spektrogramm (68) Zeitbereiche (58a bis 58g), Frequenzbereiche (66a bis 66h) und Funktionswerte (70) aufweist, wobei jeder Funktionswert (70) einem Amplitudenwert (64) oder einem aus einem Amplitudenwert (64) abgeleiteten Wert eines Frequenzbereichs (66a bis 66h) eines Zeitbereichs (58a bis 58g) des Spektrogramms (68) entspricht, die Mittel zur Mustererkennung Mittel zur generalisierten Hough- Transformation umfassen und die Vorrichtung derart ausgebildet ist, um mit den Mitteln zur generalisierten Hough-Transformation und dem Referenzmuster (85) jeden Funktionswert (70) des Spektrogramms (68) in einen Bildpunkt (94) eines Hough-Raums (92) zu überführen.

14. Vorrichtung nach Anspruch 13, **dadurch gekennzeichnet, dass** jeder Bildpunkt (94) des Hough-Raums (92) einen Wert aufweist und die Vorrichtung derart ausgebildet ist, um jedem Bildpunkt (94) den Zeitbereich (58a bis 58g) des in den jeweiligen Bildpunkt (94) überführten Funktionswertes (70) zuzuordnen und um für jeden Zeitbereich (58a bis 58g) des Spektrogramms (68) den Maximalwert (96) der Werte der Bildpunkte(94), die dem jeweiligen Zeitbereich (58a bis 58g) zugeordnet sind, zu bestimmen und um das Referenzmuster (85) in dem oder den Zeitbereichen (58a bis 58g) zu erkennen, bei dem oder denen der jeweilige Maximalwert (96) oberhalb eines Schwellenwertes (98) liegt.

15. Aktivsonaranlage (99), mit einer Vorrichtung nach einem der Ansprüche 9 bis 14 zur Ausführung eines Verfahrens nach einem der Ansprüche 1 bis 8 mit mindestens einem Sender (14) zum Aussenden von Schallwellen (16) und mit mindestens einem Empfänger (22) zum Empfangen der an einem rückstreuungsfähigen, natürlichen oder technischen Objekt (100) reflektierten Schallwellen (16) und zum Umwandeln der empfangenen Schallwellen in Empfangssignale (23).

## Claims

1. A method for detecting one or more predetermined impulses (80) or predetermined impulse sequences (82) in a received signal (23) determined from received sound waves (16) or in several received signals (23) combined to a group signal (33) and determined from received sound waves (16), wherein the sound waves (16) are generated from a transmitting signal with at least one transmitting impulse sequence (46), wherein a predetermined impulse sequence (82) comprises several predetermined impulses (80) directly successive in time and a predetermined impulse (80) has a time duration (81) in which the group signal or received signal (54) has a substantially constant or varying frequency (79a or 79b) or several substantially constant and/or varying frequencies (79a and 79b), wherein a spectrogram (68) is determined from the group- or received signal (54) and a reference pattern (85) is determined from the predetermined impulse sequence (82), and the reference pattern (85) is sought by pattern recognition in the spectrogram (68) or in an image derived from the spectrogram (68) in order to detect the predetermined impulse (80) or the predetermined impulse sequence (82) once or multiply in groups or in received signals (54) of the spectrogram (68) or in the image derived from the spectrogram when the reference pattern (85) is recognized once or multiply in the spectrogram (68) or in the derived image, **characterized by** that the transmitting signal is formed with at least one transmitting impulse sequence (46) by a single transmitter (14).

2. The method according to Claim 1, **characterized by** that the spectrogram (68) is determined in that the group- or received signal (54) is subdivided into successive time windows (57) of a time range (58a to 58g) with the same set time duration (60), and that a spectrum (62) is determined from each time window (57) of a time range (58a to 58g), wherein the same time range (58a to 58g) of the particular time window (57) forming the base in the determination of the spectrum (62) is associated with the spectrum (62), and that the spectrogram (68) is determined with a set number of spectra (62) of successive time ranges (58a to 58g), wherein each time range (58a to 58g) of the spectrogram (68) is associated with the time range (58a to 58g) of the particular spectrum (62) in this particular time range (58a to 58g).

3. The method according to Claim 1 or 2, **characterized by** that the set time duration (60) of a time window (57) is selected in such a manner that the duration in time (81) of the predetermined impulse (80) or of each of the predetermined impulses (80) of an impulse sequence (82) and the set time duration (60) of a time window (57) are equal, and the time ranges (58a to 58g) of the time windows (57) in the group- or received signal (54) are selected in such a manner that each impulse (80) occurring in the group- or received signal (54) is substantially inside a time window (57).

4. The method according to one of the previous claims, wherein the transmitting signal is formed with at least the transmitting impulse (48a, 48b) or at least the transmitting impulse sequence (46), sound waves (16) are produced with the transmitting signal and the sound waves (16) are transmitted at one or several transmitting times (52), the predetermined impulse (80) or the predetermined impulse sequence (82) is predetermined in that this impulse or this impulse sequence is determined from the transmitting impulse (48a, 48b) or the transmitting impulse sequence (46), and the point in time or the points in time of the time range (58a to 58g) or of the time ranges (58a to 58g) of the spectrogram (68) in which range or ranges the predetermined impulse (80) or the predetermined impulse sequence (82) is detected is/are determined.

5. The method according to one of the previous claims, **characterized by** that the spectrogram (68) comprises time ranges (58a to 58g), frequency ranges (66a to 66h) and functional values (70), whereby each functional value (70) corresponds to an amplitude value (64) or to a value of a frequency range (66a to 66h) of a time range (58a to 58g) of the spectrogram (68), which value is derived from an amplitude value (64), the pattern recognition comprises a generalized Hough transformation, and each functional value (70) of the spectrogram (68) is transferred into an image point (94) of a Hough space (92) by the generalized Hough transformation and the reference pattern (85).

6. The method according to Claim 5, **characterized by** that each image point (94) of the Hough space (92) has a value and that the time range (58a to 58g) of the functional value (70) transferred into the particular image point (94) is associated with each image point (94) and the maximal value (96) of the values of the image points (94) associated with the particular time range (58a to 58g) is determined for each time range (58a to 58g) of the spectrogram (68), and that the reference pattern in the time range or time ranges (58a to 58g) is recognized in which time range or time ranges the particular maximal value (96) is above a threshold value (98).

7. The method according to Claim 5 or 6, **characterized by** that the pattern recognition comprises an edge detection and that the spectrogram (68) is transferred before the transfer into the Hough space (92) into an edge image (76) and then the edge image (76) is transferred into the Hough space (92), wherein the edge image (76) or a differential spectrogram corresponding to the edge image (76) is formed in that the difference of the functional values (70) of a basic time range and of the functional values (70) of a time range that follows or precedes it in time is entered in all time ranges (58a to 58g) with the same frequency ranges (66a to 66h) into the differential spectrogram for the basic time range.

8. The method according to one of Claims 5 to 7, **characterized by** that the reference pattern (85) is determined in that a reference signal (78) with the predetermined impulse (80) or the predetermined impulse sequence (82) is formed, divided into time windows (57) of a time range (58h to 58j) with the same time duration (60) as the time windows (57) of the group- or received signal (54), a reference spectrum is determined from each time window (57), and a reference spectrogram is formed with the reference spectra, and the reference spectrogram is transferred into the reference pattern (85) in that the functional value or functional values (70) of the reference spectrogram above a reference value (84) are selected as the end point or end points (90) of a location vector or of a location vector in each instance (89) and that the starting point of the location vector or vectors is selected as a reference point (88), and that the location vector or vectors (89) and the reference point (88) form the reference pattern (85).

9. A device for the detection of one or more predetermined impulses (80) or predetermined impulse sequences (82) in a received signal (23) determined from received sound waves (16) or several received signals (23) combined to a group signal (33) and determined from received sound waves (16), wherein the sound waves (16) are generated from a transmitting signal with at least one transmitting impulse sequence (46), wherein a predetermined impulse sequence (82) comprises several predetermined impulses (80) directly successive in time and a predetermined impulse (80) has a time duration (81) in which the group- or received signal (54) has a substantially constant or varying frequency (79a or 79b) or several substantially constant and/or varying frequencies (79a and 79b), wherein the device is constructed in such a manner as to determine a spectrogram (68) from the group- or received signal (54) and determine a reference pattern (85) from the predetermined impulse sequence (82), and to seek the reference pattern (85) with means for pattern recognition (42) in the spectrogram (68) or in an image derived from the spectrogram (68) in order to detect the predetermined impulse (80) or the predetermined impulse sequence (82) once or multiply in the group- or received signal (54) of the spectrogram (68) or in the image derived from the spectrogram when the reference pattern (85) is recognized once or multiply in the spectrogram (68) or in the derived image, **characterized by** that the transmitting signal is formed with at least one transmitting impulse (48a, 48b) or with at least one transmitting impulse sequence (46) by a single transmitter (14).

10. The device according to Claim 9, **characterized by** that the device is constructed in such a manner as to determine the spectrogram (68) in that the device is constructed in such a manner as to subdivide the group- or received signal (54) into successive time windows (57) of a time range (58a to 58g) of the same set time duration (60) in order to determine a spectrum (62) from each time window (57) of a time range (58a to 58g), wherein the device is constructed in such a manner as to associate the same time range (58a to 58g) of the particular time window (57) taken as base during the determination with the spectrum, and that the device is constructed in such a manner as to determine the spectrogram (68) with a set number of spectra (62) of successive time ranges (58a to 58g), wherein the device is constructed in such a manner as to associate each time range (58a to 58g) of the spectrogram (68) with the time range (58a to 58g) of the particular spectrum (62) in this particular time range (58a to 58g).

11. The device according to Claim 9 or 10, **characterized by** that the device is constructed in such a manner as to select the set time duration (60) of a time window (57) in such a manner that the duration in time (81) of the previously determined impulse (80) or of each of the previously determined impulses (80) of an impulse sequence (82) and the set time duration (60) of a time window (57) are equal and that the device is constructed in such a manner as to select the time ranges (58a to 58g) of the time windows (57) in the group- or received signal (54) in such a manner that each impulse (80) occurring in the group- or received signal (54 is substantially inside a time window (57).

12. The device according to one of Claims 9 to 11, **characterized by** that the device is constructed in such a manner as to form the transmitting signal with at least the transmitting impulse (48a, 48b) or at least the transmitting impulse sequence (46), to generate sound waves with the transmitting signal and to transmit the sound waves (16) at one or more transmitting time points (52), to predetermine the predetermined impulse (80) or the impulse sequence (82) to be predetermined in that this impulse or this impulse sequence is determined from the transmitting impulse (48a, 48b) or from the transmitting impulse sequence (46), and in order to determine the point in time or points in time of the time range (58a to 58g) or time ranges (58a to 58g) of the spectrogram in which the predetermined impulse (80) or the predetermined impulse sequence (82) is detected.

13. The device according to one of Claims 9 to 12, **characterized by** that the spectrogram (68) comprises time ranges (58a to 58g), frequency ranges (66a to 66h) and functional values (70), whereby each functional value (70) corresponds to an amplitude value (64) or to a value of a frequency range (66a to 66h) of a time range (58a to 58g) of the spectrogram (68), which value is derived from an amplitude value (64), that the means for the pattern recognition comprises means for the generalized Hough transformation and that the device is constructed in such a manner as to transfer each functional value (70) of the spectrogram (68) into an image point (94) of a Hough space (92) with the means for the generalized Hough transformation and the reference pattern (85).

14. The device according to Claim 13, **characterized by** that each image point (94) of the Hough space (92) has a value and that the device is constructed in such a manner as to associate the time range (58a to 58g) of the functional value (70) transferred into the particular image point (94) with each image point (94), and to determine the maximal value (96) of the values of the image points (94) that are associated with the particular time range (58a to 58g) for each time range (58a to 58g) of the spectrogram (68), and to recognize the reference pattern (85) in the time range or ranges (58a to 58g) in which pattern or patterns the particular maximum value (96) is above a threshold value (98).

15. An active sonar system (99) with a device according to one of Claims 9 to 14 for carrying out a method according to one of Claims 1 to 8 with at least one transmitter (14) for transmitting sound waves (16) and with at least one receiver (22) for receiving the sound waves (16) reflected from a natural or technical object (100) and capable of backscatter, and for converting the received sound waves into received signals (23).

## Revendications

1. Procédé de détection d'une ou de plusieurs impulsions prédéfinies (80) ou séries d'impulsions prédéfinies (82) dans un signal de réception (23) déterminé à partir d'ondes sonores reçues (16) ou dans plusieurs signaux de réception (23) déterminés à partir d'ondes sonores reçues (16) et groupés en un signal de groupe (33), les ondes sonores (16) étant générées à partir d'un signal d'émission comprenant au moins une série d'impulsions d'émission (46), une série d'impulsions prédéfinie (82) comprenant plusieurs impulsions prédéfinies (80) immédiatement successives et une impulsion prédéfinie (80) comprenant une durée (81) pendant laquelle le signal de groupe ou de réception (54) présente une fréquence (79a ou 79b) essentiellement constante ou variable ou plusieurs fréquences (79a et 79b) respectivement essentiellement constantes et/ou variables, un spectrogramme (68) étant déterminé à partir du signal de groupe ou de réception (54) et un motif de référence (85) à partir de la série d'impulsions prédéfinie (82) et le motif de référence (85) étant recherché dans le spectrogramme (68) ou dans une image dérivée du spectrogramme (68) au moyen d'une reconnaissance des formes pour détecter l'impulsion prédéfinie (80) ou la série d'impulsions prédéfinie (82) une ou plusieurs fois dans des signaux de réception ou de groupe (54) du spectrogramme (68) ou dans l'image dérivée du spectrogramme quand le motif de référence (85) est identifié une ou plusieurs fois dans le spectrogramme (68) ou l'image dérivée, **caractérisé en ce que** le signal d'émission avec au moins une série d'impulsions d'émission (46) est formé par un seul émetteur (14).

2. Procédé selon la revendication 1, **caractérisé en ce que** le spectrogramme (68) est déterminé par subdivision du signal de groupe ou de réception (54) dans des intervalles de temps successifs (57) d'un domaine temporel (58a à 58g) respectif de la même durée donnée (60), et **en ce qu'**un spectre (62) est respectivement déterminé à partir de chaque intervalle de temps (57) d'un domaine temporel (58a à 58g), le même domaine temporel (58a à 58g) de l'intervalle de temps (57) respectif pris comme base lors de la détermination du spectre (62) étant associé au spectre (62), et le spectrogramme (68) étant déterminé avec un nombre donné de spectres (62) des domaines temporels (58a à 58g) successifs, à chaque domaine temporel (58a à 58g) du spectrogramme (68) étant respectivement associé le domaine temporel (58a à 58g) du spectre respectif (62) dans ce domaine temporel respectif (58a à 58g).

3. Procédé selon la revendication 1 ou 2, **caractérisé en ce que** la durée donnée (60) d'un intervalle de temps (57) est choisie de telle manière que la durée (81) de l'impulsion prédéfinie (80) ou de chacune des impulsions prédéfinies (80) d'une série d'impulsions (82) et la durée donnée (60) d'un intervalle de temps (57) sont identiques et que les domaines temporels (58a à 58g) des intervalles de temps (57) dans le signal de groupe ou de réception (54) sont choisis de telle manière que chaque impulsion (80) apparaissant dans le signal de groupe ou de réception (54) se trouve essentiellement comprise dans un intervalle de temps (57).

4. Procédé selon l'une des revendications précédentes, dans lequel le signal d'émission est formé avec au moins l'impulsion d'émission (48a, 48b) ou au moins la série d'impulsions d'émission (46), des ondes sonores (16) sont générées avec le signal d'émission et envoyées à partir d'un ou de plusieurs moments d'émission (52), l'impulsion prédéfinie (80) ou la série d'impulsions prédéfinie (82) est prédéfinie par le fait qu'elle est déterminée à partir de l'impulsion d'émission (48a, 48b) ou de la série d'impulsions d'émission (46), et dans lequel sont définis le ou les moments du ou des domaines temporels (58a à 58g) du spectrogramme (68) auquel ou auxquels l'impulsion prédéfinie (80) ou la série d'impulsions prédéfinie (82) est détectée.

5. Procédé selon l'une des revendications précédentes, **caractérisé en ce que** le spectrogramme (68) comporte des domaines temporels (58a à 58g), des domaines fréquentiels (66a à 66h) et des valeurs de fonction (70), chaque valeur de fonction (70) correspondant à une valeur d'amplitude (64) ou une valeur dérivée d'une valeur d'amplitude (64) d'un domaine fréquentiel (66a à 66h) d'un domaine temporel (58a à 58g) du spectrogramme (68), la reconnaissance des formes comprenant une transformée de Hough généralisée et chaque valeur de fonction (70) du spectrogramme (68) étant transformée en un point d'image (94) d'un espace de Hough (92) au moyen de la transformée de Hough généralisée et du motif de référence (85).

6. Procédé selon la revendication 5, **caractérisé en ce que** chaque point d'image (94) de l'espace de Hough (92) présente une valeur, le domaine temporel (58a à 58g) respectif de la valeur de fonction (70) transformée en point d'image respectif (94) est associé à chaque point d'image (94), la valeur maximale (96) des valeurs des points d'image (94) associés au domaine temporel respectif (58a à 58g) est déterminée pour chaque domaine temporel (58a à 58g) du spectrogramme (68) et le motif de référence est identifié dans le ou les domaines temporels (58a à 58g) pour lequel ou lesquels la valeur maximale respective (96) est supérieure à une valeur seuil (98).

7. Procédé selon la revendication 5 ou 6, **caractérisé en ce que** la reconnaissance des formes comprend une détection des contours et le spectrogramme (68) est transformé avant la transformation dans l'espace de Hough (92) en une image de contour (76), puis l'image de contour (76) est transformée dans l'espace de Hough (92), l'image de contour (76) ou un spectrogramme différentiel correspondant à l'image de contour (76) étant formé(e) en inscrivant, dans le spectrogramme différentiel pour le domaine temporel respectif pris comme base et pour tous les domaines temporels (58a à 58g), la différence respective entre les valeurs de fonction (70) d'un domaine temporel pris respectivement comme base et les valeurs de fonction (70) d'un domaine temporel respectif suivant ou précédent dans le temps avec les mêmes domaines fréquentiels (66a à 66h).

8. Procédé selon l'une des revendications 5 à 7, **caractérisé en ce que** le motif de référence (85) est déterminé en formant un signal de référence (78) avec l'impulsion prédéfinie (80) ou la série d'impulsions prédéfinie (82), en le subdivisant en intervalles de temps (57) d'un domaine temporel respectif (58h à 58j) avec la même durée (60) que les intervalles de temps (57) du signal de groupe ou de réception (54), en déterminant à partir de chaque intervalle de temps (57) un spectre de référence respectif et en formant un spectrogramme de référence avec les spectres de référence et **en ce que** le spectrogramme de référence est transformé en motif de référence (85) en choisissant la ou les valeurs de fonction (70) du spectrogramme de référence supérieures à une valeur de référence (84) comme la ou les extrémités (90) d'un vecteur de position ou respectivement d'un vecteur de position (89) et le point de départ du ou des vecteurs de position comme un point de référence (88) et du fait que le ou les vecteurs de position (89) et le point de référence (88) forment le motif de référence (85).

9. Dispositif de détection d'une ou de plusieurs impulsions prédéfinies (80) ou séries d'impulsions prédéfinies (82) dans un signal de réception (23) déterminé à partir d'ondes sonores reçues (16) ou dans plusieurs signaux de réception (23) déterminés à partir d'ondes sonores reçues (16) et groupés en un signal de groupe (33), les ondes sonores (16) étant générées à partir d'un signal d'émission comprenant au moins une série d'impulsions d'émission (46), une série d'impulsions prédéfinie (82) comprenant plusieurs impulsions prédéfinies (80) immédiatement successives et une impulsion prédéfinie (80) comprenant une durée (81) pendant laquelle le signal de groupe ou de réception (54) présente une fréquence (79a ou 79b) essentiellement constante ou variable ou plusieurs fréquences (79a et 79b) respectivement essentiellement constantes et/ou variables, le dispositif étant réalisé de manière à déterminer un spectrogramme (68) à partir du signal de groupe ou de réception (54) et un motif de référence (85) à partir de la série d'impulsions prédéfinie (82), et rechercher le motif de référence (85) dans le spectrogramme (68) ou dans une image dérivée du spectrogramme (68) avec des moyens de reconnaissance des formes (42), détecter l'impulsion prédéfinie (80) ou la série d'impulsions prédéfinie (82) une ou plusieurs fois dans le signal de groupe ou de réception (54) du spectrogramme (68) ou dans l'image dérivée du spectrogramme quand le motif de référence (85) est identifié une ou plusieurs fois dans le spectrogramme (68) ou l'image dérivée, **caractérisé en ce que** le signal d'émission avec au moins une impulsion d'émission (48a, 48b) ou au moins une série d'impulsions d'émission (46) est formé par un seul émetteur (14).

10. Dispositif selon la revendication 9, **caractérisé en ce que** le dispositif est réalisé de manière à déterminer le spectrogramme (68) en réalisant le dispositif de façon à subdiviser le signal de groupe ou de réception (54) en intervalles de temps successifs (57) d'un domaine temporel respectif (58a à 58g) de la même durée donnée (60), pour déterminer un spectre respectif (62) à partir de chaque intervalle de temps (57) d'un domaine temporel (58a à 58g), le dispositif étant réalisé de manière à associer au spectre (57) le même domaine temporel (58a à 58g) de l'intervalle de temps (57) respectif pris comme base lors de la détermination, et le dispositif étant réalisé de manière à déterminer le spectrogramme (68) avec un nombre donnée de spectres (62) des domaines temporels (58a à 58g) successifs, le dispositif étant réalisé de manière à associer respectivement à chaque domaine temporel (58a à 58g) du spectrogramme (68) le domaine temporel respectif (58a à 58g) du spectre respectif (62) dans ce domaine temporel respectif (58a à 58g).

11. Dispositif selon la revendication 9 ou 10, **caractérisé en ce que** le dispositif est réalisé de manière à choisir la durée donnée (60) d'un intervalle de temps (57) de telle manière que la durée (81) de l'impulsion prédéfinie (80) ou de chacune des impulsions prédéfinies (80) d'une série d'impulsions (82) et la durée déterminée (60) d'un intervalle de temps (57) sont identiques et que le dispositif est réalisé de manière à choisir les domaines temporels (58a à 58g) des intervalles de temps (57) dans le signal de groupe ou de réception (54) de telle manière que chaque impulsion (80) apparaissant dans le signal de groupe ou de réception (54) se trouve essentiellement comprise dans un intervalle de temps (57).

12. Dispositif selon l'une des revendications 9 à 11, **caractérisé en ce que** le dispositif est réalisé de manière à former le signal d'émission avec au moins l'impulsion d'émission (48a, 48b) ou au moins la série d'impulsions d'émission (46), à générer des ondes sonores (16) avec le signal d'émission et à envoyer les ondes sonores (16) à partir d'un ou de plusieurs moments d'émission (52), à prédéfinir l'impulsion prédéfinie (80) ou la série d'impulsions prédéfinie (82) en déterminant celle(s)-ci partir de l'impulsion d'émission (48a, 48b) ou de la série d'impulsions d'émission (46), et à déterminer le ou les moments du ou des domaines temporels (58a à 58g) du spectrogramme auquel/auxquels l'impulsion prédéfinie (80) ou la série d'impulsions prédéfinie (82) est détectée.

13. Dispositif selon l'une des revendications 9 à 12, **caractérisé en ce que** le spectrogramme (68) comporte des domaines temporels (58a à 58g), des domaines fréquentiels (66a à 66h) et des valeurs de fonction (70), chaque valeur de fonction (70) correspondant à une valeur d'amplitude (64) ou à une valeur dérivée d'une valeur d'amplitude (64) d'un domaine fréquentiel (66a à 66h) d'un domaine temporel (58a à 58g) du spectrogramme (68), les moyens de reconnaissance des formes comprenant des moyens pour réaliser une transformée de Hough généralisée et le dispositif étant réalisé de manière à transformer chaque valeur de fonction (70) du spectrogramme (68) en un point d'image (94) d'un espace de Hough (92) avec les moyens pour réaliser une transformée de Hough généralisée et avec le motif de référence (85).

14. Dispositif selon la revendication 13, **caractérisé en ce que** chaque point d'image (94) de l'espace de Hough (92) présente une valeur et **en ce que** le dispositif est réalisé de manière à associer à chaque point d'image (94) le domaine temporel (58a à 58g) de la valeur de fonction (70) transformée en point d'image respectif (94) et à déterminer pour chaque domaine temporel (58a à 58g) du spectrogramme (68) la valeur maximale (96) des valeurs des points d'image (94) qui sont associés au domaine temporel respectif (58a à 58g) et à identifier le motif de référence (85) dans le ou les domaines temporels (58a à 58g) pour lequel ou lesquels la valeur maximale respective (96) est supérieure à une valeur seuil (98).

15. Installation de sonar actif (99), comprenant un dispositif selon l'une des revendications 9 à 14 destiné à exécuter un procédé selon l'une des revendications 1 à 8, comprenant au moins un émetteur (14) destiné à émettre des ondes sonores (16) et au moins un récepteur (22) destiné à recevoir les ondes sonores (16) réfléchies sur un objet (100) naturel ou technique capable de rétrodiffusion et destiné à transformer les ondes sonores reçues en signaux de réception (23).
